# EUROPÄISCHE PATENTSCHRIFT

(11) **EP 1 331 534 B1**
(45) Veröffentlichungstag und Bekanntmachung des Hinweises auf die Patenterteilung: **29.10.2008**
(21) Anmeldenummer: 03000757.9
(22) Anmeldetag: 13.01.2003
(51) Int. Cl.: G05B 19/042

(54) **Automatisierungssystem und Verfahren zur Erzeugung einer Dokumentation**
Automation system and method for generating a documentation
Système d'automatisation et procédé de génération de documentation

(30) Priorität: 23.01.2002 DE 10202498
(43) Veröffentlichungstag der Anmeldung: 30.07.2003
(73) Patentinhaber: SIEMENS AKTIENGESELLSCHAFT, 80333 München (DE)
(72) Erfinder: Danz, Mirko, 90537 Feucht (DE); Meier, Christof, Dr., 91336 Heroldsbach (DE); Schaaf, Joachim-Uwe, 50374 Erftstadt (DE)

(56) Entgegenhaltungen:
- WO-A-01/35178
- WO-A-97/39391
- US-A- 5 913 066

## Beschreibung

Die Erfindung betrifft ein Automatisierungssystem und ein Verfahren zur Erzeugung einer Dokumentation in einem Speicher eines Automatisierungssystems, sowie ein entsprechendes Computerprogramm.

Die US 5,913,066 beschreibt eine elektronische Arbeitsumgebung eines Datenverarbeitungssystems. Bestimmte Hard- und Softwareelemente des Systems können identifiziert und konfiguriert werden. Zusätzliche Komponenten können bestellt werden, um das System zu erweitern. Eine Bestellinformation wird mit der tatsächlichen Systemkonfiguration verglichen, um systemspezifische Anweisungen zu kompilieren und eine individuelle Installation zu erzeugen.

Die WO 97/39391 A1 beschreibt ein Verfahren zum Betreiben eines Steuergeräts. In einer programmierbaren Speichereinrichtung sind Daten und Programme zum Betrieb des Steuergeräts abgespeichert. Einhergehend mit einer Programmierung der Speichereinrichtung werden Daten gespeichert, die den Programmiervorgang dokumentieren. Dadurch kann der Programmiervorgang rekonstruiert werden.

Die WO 01/35178 A1 beschreibt ein System und ein Verfahren zur objektorientierten Markierung und Zuordnung von Information zu selektierten technologischen Komponenten. Abgespeicherte Dokumentationsdaten werden basierend auf realer Information ausgewählt und beispielsweise für Servicezwecke zur Verfügung gestellt.

Vor der Inbetriebnahme eines Automatisierungssystems ist im Allgemeinen eine Abnahme des Systems und/oder eine Validierung erforderlich. Dies trifft auf alle Arten von Automatisierungssystemen zu, insbesondere bei und in Verpackungsmaschinen, Pressen, Kunststoffspritzmaschinen, Textilmaschinen, Druckmaschinen, Werkzeugmaschinen, Robotern, Handling-Systemen, Holzverarbeitungsmaschinen, Glasverarbeitungsmaschinen, Keramikverarbeitungsmaschinen, Hebezeugen und anderen.

Insbesondere in der Pharma-Branche müssen Automatisierungssysteme der Validierung unterzogen werden, was sowohl die Hardware- als auch die Software-Komponenten eines solchen Automatisierungssystems betrifft. Ein Beispiel für Automatisierungssysteme in der Pharma-Branche sind Steuerungssysteme für Pharma-Verpackungsmaschinen. Die Validierung muss gegenüber den zuständigen Behörden, zum Beispiel der Food and Drug Administration (FDA) in den USA, erfolgen. Die Validierung erbringt den Nachweis, dass das System in Übereinstimmung mit seiner Spezifikation arbeitet.

Die für die Validierung notwendigen Aktivitäten erfordern, dass von allen am Gesamtsystem beteiligten Komponenten technische Unterlagen, "händisch" zusammengetragen werden und die Gesamtfunktionalität durch zahlreiche Einzeltestszenarien und deren Dokumentation (Qualifizierungsdokumentation) nachgewiesen wird.

Meist obliegt dem Maschinenbauer die Aufgabe, seine an der Maschine beteiligten Komponenten zu qualifizieren, d. h. Testszenarien durchzuführen und die Qualifizierungsdokumentation bereitzustellen. Dies beinhaltet auch Automatisierungskomponenten und Systemsoftware, die der Maschinenbauer in der Regel von einem Steuerungslieferanten bezieht. Eine Wiederverwendbarkeit der für eine Maschine durchgeführten Qualifizierungsmaßnahmen ist nicht gegeben. Der Aufwand der Validierungsdurchführung erreicht eine finanzielle Größenordnung, die vielfach mehr als 10% der Gesamtsystemkosten beträgt.

Während des Betriebes einer validierten Maschine ist dafür Sorge zu tragen, dass die Maschine im validierten Zustand verbleibt. Jegliche Veränderung an der Maschine (z. B. Ersatzteilbereitstellung) darf keine Auswirkungen auf die Funktionalität und den einwandfreien Zustand der verarbeiteten pharmazeutischen Produkte haben. Heute müssen zum dokumentierten Nachweis händisch Maschinenlogbücher geführt werden. Im Zweifelsfall ist eine Revalidierung der Maschine durchzuführen, welche - gemessen am Ersatzteilwert - eine hohe Kostenbelastung und ggf. auch Produktionsausfall hervorruft.

Der Erfindung liegt daher die Aufgabe zu Grunde ein verbessertes Automatisierungssystem zu schaffen, sowie ein Verfahren zur Erzeugung einer Dokumentation für ein Automatisierungssystem und ein entsprechendes Computerprogramm.

Die der Erfindung zu Grunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Die Erfindung erlaubt es den für die Validierung erforderlichen Zeit- und Kostenaufwand drastisch zu reduzieren. Dies basiert auf der Verwendung von "validierfesten" System-Komponenten, das heißt, jede System-Komponente des Automatisierungssystems speichert Beschreibungsdaten hinsichtlich der Spezifikation und/oder des Status der betreffenden System-Komponente. Insbesondere sind dies Daten über Typ, Ausführungsversionen, Releases usw.

Bei der Initialisierung des Automatisierungssystems werden die Beschreibungsdaten von den System-Komponenten automatisch abgefragt. Es wird insbesondere geprüft, ob die aktuelle Anlagenkonfiguration identisch zur letzen dokumentierten Konfiguration ist. Haben sich Änderungen ergeben, so wird aus den Beschreibungsdaten dann ein neues Dokument in einer Auszeichnungssprache generiert, zum Beispiel ein HTML Dokument oder ein XML Dokument.

Dieses Dokument wird dann in einem Speicher gespeichert. Auf den Speicher kann über eine Schnittstelle zugegriffen werden. Hierzu muss zunächst ein Zugriffsschutz für einen autorisierten Benutzer aufgehoben werden. Durch einen lesenden Zugriff auf das Dokument kann so die aktuelle Konfiguration des Systems inklusive seiner Historie abgefragt werden.

Der autorisierte Benutzer kann im Falle von Änderungen an der Systemkonfiguration das aktuelle Dokument in dem Speicher durch Kommentar- bzw. sonstige ergänzenden Logbucheinträge vervollständigen und abspeichern. In diesem Fall wird kein neues Dokument erzeugt, sondern die Kommentare des Benutzers werden in dem aktuellen Dokument gespeichert Durch die sukzessiv in der Statuts-Datenbank gespeicherten Dokumente ergibt sich eine Änderungshistorie, also ein Change Control Protokoll mit Logbuch-funktion.

Bei einem schreibenden Zugriff stellt das System im Sinne der Erfindung sicher, dass vom Anwender keine durch das System automatisch generierten Informationen überschrieben, geändert, gelöscht oder in sonstiger Art und Weise manipuliert werden können.

Nach einer bevorzugten Ausführungsform der Erfindung wird zunächst auf eine Validierungsdatenbank zugegriffen, bevor eine Änderung in dem aktuellen Dokument bzw. in dem Automatisierungssystem vorgenommen wird. Die Validierungsdatenbank beinhaltet Informationen hinsichtlich erlaubter Änderungen, das heißt Modifikationen oder Erweiterungen des Automatisierungssystems, die ohne erneute Validierung möglich sind, sowie auch Informationen hinsichtlich Art und Umfang von gegebenenfalls durchzuführenden Validierungsmaßnahmen für eine gewünschte Änderung. Die Abfrage in der Validierungsdatenbank kann dabei durch den Benutzer erfolgen oder auch automatisch erfolgen.

Nach einer bevorzugten Ausführungsform der Erfindung hat jede Hardware-System-Komponente des Automatisierungssystems einen Speicher, auf dem die Beschreibungsdaten der betreffenden Hardware-Komponente abgelegt sind. In diesem Speicher wird bei der Systeminitialisierung durch ein Abfrage-Programm zugegriffen, um die Beschreibungsdaten auszulesen.

Nach einer weiteren bevorzugten Ausführungsform der Erfindung besitzt jede Software-Komponente des Automatisierungssystems Informationen mit Beschreibungsdaten für die betreffende Software-Komponente, die eine Selbstidentifikation der Software-Komponente darstellt. Diese Informationen werden bei der Initialisierung des Systems ausgelesen. Beispielsweise können die Beschreibungsdaten in einem Header- oder Footer-Datenfeld der Software-Komponente gespeichert werden.

Nach einer weiteren bevorzugten Ausführungsform der Erfindung hat das Automatisierungssystem mehrere Steuerungen. Jede der Steuerungen ist wiederum mit verschiedenen Hardware- und Software-Komponenten verknüpft. In jeder der Steuerungen wird dann ein Teil-Dokument generiert, welches die Beschreibungsdaten der System-Komponenten, die mit der betreffenden Steuerung verknüpft sind, beinhaltet.

Dieses Teil-Dokument wird dann bei der Initialisierung des Automatisierungssystems gelesen und zusammen mit den anderen Beschreibungsdaten in ein aktuelles Gesamtdokument integriert, welches dann gespeichert wird.

Im Weiteren werden bevorzugte Ausführungsbeispiele der Erfindung mit Bezugnahme auf die Zeichnungen näher erläutert. Es zeigen:
- Figur 1: ein Blockdiagramm einer Ausführungsform eines erfindungsgemäßen Automatisierungssystems,
- Figur 2: ein Flussdiagramm einer Ausführungsform des erfindungsgemäßen Verfahrens,
- Figur 3: ein Flussdiagramm für die Abfrage der Validierungsdatenbank für den Fall des Austauschs eines Ersatzteils.

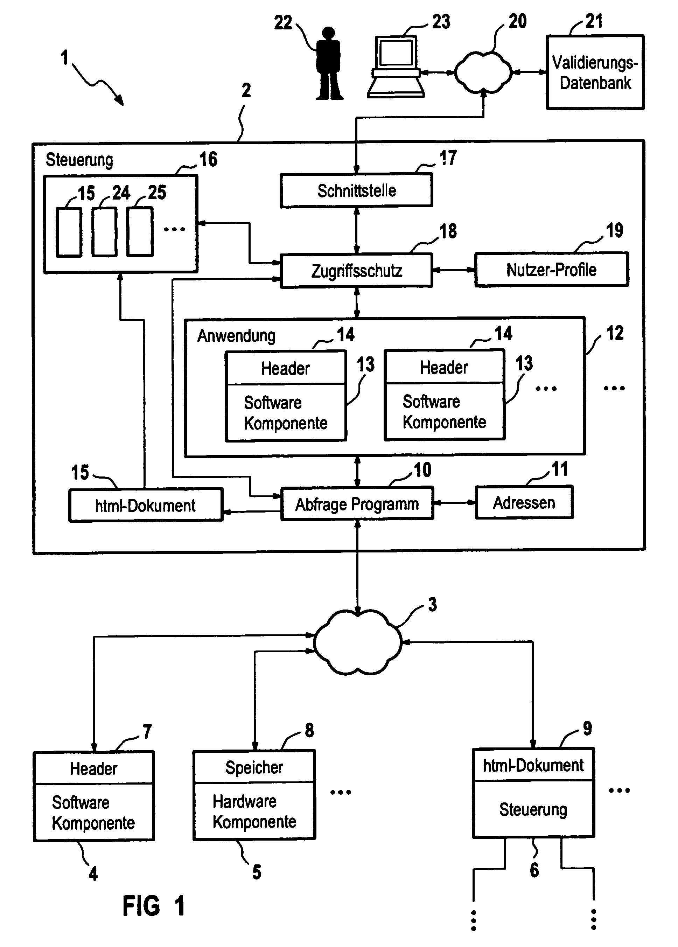

Die Figur 1 zeigt ein Automatisierungssystem 1 mit einer Steuerung 2. Bei der Steuerung 2 kann es sich um eine sogenannte speicherprogrammierbare Steuerung (SPS) handeln, beispielsweise, um eine SIMOTION der Firma Siemens AG.

Die Steuerung 2 ist über ein Netzwerk 3 mit verschiedenen Software-Komponenten 4, Hardware-Komponenten 5 und ein oder mehreren Steuerungen 6 verbunden.

Bei dem Netzwerk 3 kann es sich um einen Feldbus, einen Profibus, Ethernet, Industrial Ethernet, FireWire oder ein anderes Kommunikationssystem handeln.

Jede Software-Komponente 4 hat ein Header-Datenfeld 7, welches Beschreibungsdaten bezüglich der Software-Komponente 4 beinhaltet. Zu den Beschreibungsdaten können die Zugehörigkeit zu einer bestimmten Anwendung, eine Versionsnummer sowie weitere Spezifikationsdaten gehören.

Zur Speicherung von solchen Beschreibungsdaten beinhaltet jede der Hardware-Komponenten 5 einen Speicher 8. Die Beschreibungsdaten für die Hardware-Komponente 5 in dem Speicher 8 betreffen zum Beispiel technische Daten der Hardware-Komponente, insbesondere Typbezeichnung und Versionsnummer.

Die Steuerung 6 erzeugt dagegen ein Teil-Dokument 9, welches die Beschreibungsdaten der mit der Steuerung 6 verbundenen weiteren Hardware- und Software-Komponenten beinhaltet.

Die Steuerung 2 beinhaltet ein Abfrage-Programm 10, welches über das Netzwerk 3 auf die Software-Komponenten 4, die Hardware-Komponenten 5, sowie die Steuerungen 6 zugreifen kann, um die Beschreibungsdaten aus den Header-Datenfeldern 7 bzw. den Speichern 8 und die Teil-Dokumente 9 der Steuerungen 6 auszulesen. Hierzu greift das Abfrage-Programm 10 auf einen Adress-Speicher 11 zu, der die Adressen der Header-Datenfelder 7, der Speicher 8 sowie die Adressen zur Abfrage der Teil-Dokumente 9 beinhaltet.

Die Steuerung 2 beinhaltet eine oder mehrere Anwendungen 12, das heißt, sogenannte Applikationen. Bei der Anwendung 12 kann es sich um eine verteilte Anwendung handeln, das heißt, eine oder mehrere Software-Komponenten 13 der Anwendung 12 laufen auf der Steuerung 2 und andere Software-Komponenten 4 und / oder Hardware-Komponenten 5 der Anwendung 12 werden über das Netzwerk 3 angesteuert. Die Software-Komponenten 13 weisen jeweils ein Header-Datenfeld 14 auf, welches die Beschreibungsdaten der betreffenden Software-Komponente 13 beinhaltet, entsprechend den Header-Datenfeldern 7 der Software-Komponenten 4.

Auch die Adressen der Header-Datenfelder 14 sind in dem Adress-Speicher 11 abgelegt. Das Abfrage-Programm 10 greift also auch mittels dieser Adressen in dem Adress-Speicher 11 auf die Header-Datenelder 14 zu, um auch die Beschreibungsdaten derjenigen Software-Komponenten 13 zu lesen, die sich unmittelbar in der Steuerung 2 selbst befinden.

Ferner können auch in der Steuerung 2 selbst weitere Software-Komponenten 4 und/oder Hardware-Komponenten 5 vorhanden sein.

Aus diesen Beschreibungsdaten von Software- und Hardware-Komponenten und von Steuerungen des Automatisierungssystems für verschiedene Anwendungen generiert das Abfrage-Programm 10 ein Dokument 15 in einer Beschreibungssprache, wie zum Beispiel HTML oder XML. Dieses Dokument 15 wird in einem Speicher 16 gespeichert.

Auf dem Speicher 16 und das darin beinhaltete aktuelle Dokument 15 und Vorgänger-Dokumente (24, 25) können über eine Schnittstelle 17 zugegriffen werden. Dabei wird zwischen Lese-Zugriff und Schreib-/(Lese)-Zugriff unterschieden.

Ein Schreib-/(Lese)-Zugriff ist nur bestimmten autorisierten Nutzern erlaubt. Zur Verwaltung der Zugriffsrechte und für die Kontrolle des Zugriffs dient eine Zugriffsschutz-Programm-Komponente 18, die mit einem Speicher 19 verknüpft ist, welcher die Nutzer-Profile mit den jeweiligen Zugriffsrechten beinhalten.

Über ein Netzwerk 20, beispielsweise das Internet, kann auf eine Validierungsdatenbank 21 zugegriffen werden. Die Validierungsdatenbank 21 beinhaltet eine Abbildung des validierten Automatisierungssystems 1 und vorteilhaft weitere Informationen zu den eingesetzten Komponenten und geben Informationen über deren Lifecycle.

In vorteilhafter Weise kann das Netzwerk 20 auch für den Datenfernzugriff verwendet werden, um Wartungsarbeiten aus der Ferne, das heißt sogenannten Teleservice, durchzuführen.

Beispielsweise beinhaltet die Validierungsdatenbank 21 für jede System-Komponente des Automatisierungssystems 1 eine Beschreibung von funktionalen Angaben sowie weitere Angaben hinsichtlich der Kompatibilität und andere Beschreibungsdaten. Vorteilhafterweise wird die Validierungsdatenbank 21 während des Entwurf- und Realisierungsprozesses des Automatisierungssystems 1 erstellt. Dies kann softwareunterstützt beispielsweise mittels Projektmanagement-Software erfolgen.

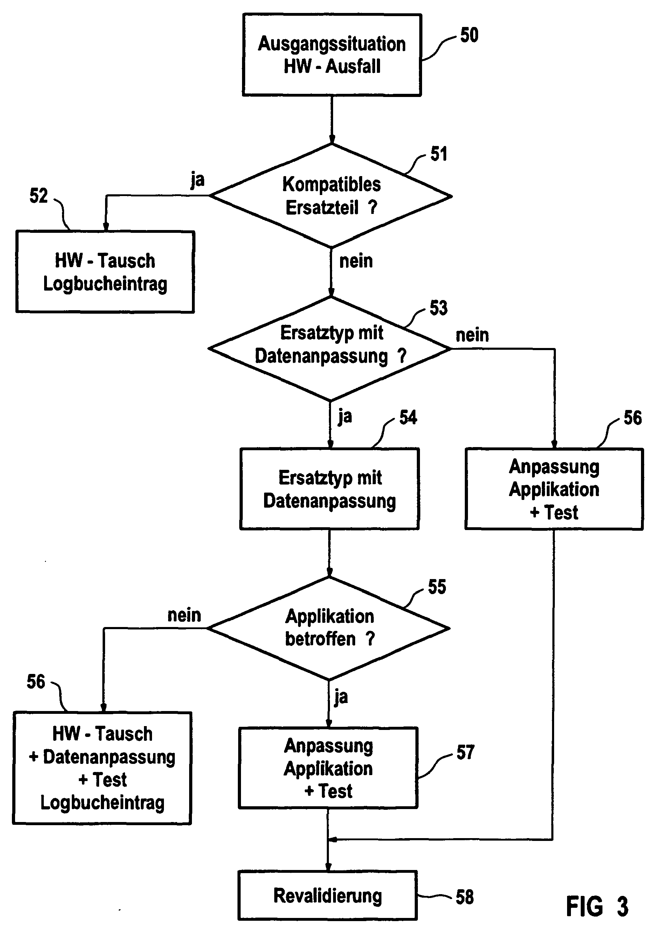

Besonders vorteilhaft ist es, wenn die Validierungsdatenbank 21 für jede System-Komponente über den Lifecycle der Komponente hinweg gepflegt wird und beispielsweise Informationen über wichtige System-Randbedingungen z. B. über die Kompatibilität und/oder ein oder mehrere Ersatz-System-Komponenten bereithält, gegen die die betreffende System-Komponente ggf. ausgetauscht werden kann, ohne dass eine erneute Validierung erforderlich ist bzw. welche Maßnahmen zur Revalidierung durchzuführen sind. Dies wird weiter unten mit Bezugnahme auf die Figur 3 näher erläutert werden.

Auf die Validierungsdatenbank 21 kann automatisch von der Steuerung 2 zugegriffen werden oder durch einen Nutzer 22 über einen Client-Computer 23.

Nach dem Austausch der Hardware-Komponente 5 kann der Nutzer 22 über die Schnittstelle 17 das Abfrageprogramm starten. Das Abfrageprogramm fragt dann die aktuellen Beschreibungsdaten der Systemkomponenten ab und vergleicht die ermittelten Beschreibungsdaten mit den Beschreibungsdaten des aktuellen Dokuments 15. Aufgrund des Austauschs der Hardware-Komponente 5 ergibt sich eine Diskrepanz zwischen den Beschreibungsdaten des aktuellen Dokuments 15 und den durch Abfrage ermittelten Beschreibungsdaten. Aufgrund dieser Diskrepanz generiert das Abfrageprogramm 10 mit den neu ermittelten Beschreibungsdaten ein neues aktuelles Dokument und speichert dieses in dem Speicher 16 ab.

Vorzugsweise wird das Abfrageprogramm 10 also auf zwei unterschiedliche Arten gestartet:
- bei jedem Einschalten des Automatisierungssystems 1. Vor dem Anlaufen der Produktion wird das Abfrageprogramm 10 zum Beispiel nach der Initialisierung des Automatisierungssystems 1 automatisch gestartet, um die Beschreibungsdaten der einzelnen Systemkomponenten abzufragen. Das Abfrageprogramm 10 vergleicht diese Beschreibungsdaten dann mit den in dem aktuellen Dokument 15 des Speichers 16 gespeicherten Beschreibungsdaten. Stimmen die aktuell ermittelten Beschreibungsdaten der Systemkomponenten mit den Beschreibungsdaten des Dokuments 15 in dem Speicher 16 überein, so wird von dem Abfrageprogramm 10 kein weiteres neues Dokument erzeugt. Der Start der Produktion wird durch das Abfrageprogramm 10 in diesem Fall ohne Weiteres freigegeben. Wenn sich eine Diskrepanz zwischen den neu ermittelten Beschreibungsdaten und den Beschreibungsdaten des Dokuments 15 in dem Speicher 16 ergibt, so generiert das Abfrageprogramm 10 automatisch ein neues aktuelles Dokument 15 mit den aktuell ermittelten Beschreibungsdaten und speichert dies in dem Speicher 16 ab. Vorteilhaft gibt das Abfrageprogramm 10 ferner eine Meldung über die Schnittstelle 17 aus, die zum Beispiel auf dem Bildschirm des Client-Computers 23 angezeigt wird. Daraufhin kann der Nutzer 22 prüfen, ob die von dem Abfrageprogramm 10 ermittelte Diskrepanz der neu ermittelten Beschreibungsdaten zulässig ist oder nicht. Nur wenn der Nutzer 22 die Zulässigkeit durch eine entsprechende Eingabe über den Client-Computer 23 bestätigt, wird der Anlauf der Produktion durch das Abfrageprogramm 10 freigegeben.
- Nach Beendigung einer Wartungsarbeit. Zur Durchführung von Wartungsarbeiten wird der Nutzer 22 zunächst das Automatisierungssystem 1 still legen. Der Zustand des Automatisierungssystem vor der Stilllegung ist in dem aktuellen Dokument 15 des Speichers 16 dokumentiert. Nach Beendigung der Wartungsarbeiten kann der Nutzer 22 das Abfrageprogramm 10 über die Schnittstelle 17 aufrufen. Das Abfrageprogramm 10 ermittelt dann wiederum die aktuellen Beschreibungsdaten der Systemkomponenten und vergleicht diese mit den Beschreibungsdaten des Dokuments 15 in dem Speicher 16. Wenn sich eine Diskrepanz ergibt, wird wiederum ein neues Dokument 15 erzeugt und in dem Speicher 16 abgelegt. Auch in diesem Fall ist es vorteilhaft, wenn das Abfrageprogramm 10 eine entsprechende Meldung an den Client-Computer 23 ausgibt. Erst nachdem der Nutzer 22 die Änderung bestätigt hat, wird dann das Automatisierungssystem 1 reaktiviert.

In dem Speicher 16 ist also das jeweils aktuelle Dokument 15 gespeichert sowie die Vorgänger-Dokumente des aktuellen Dokuments 15, das heißt die Dokumente 24, 25, .... Die einzelnen Dokumente 15 und 24, 25, ... geben also die Änderungshistorie des Automatisierungssystems 1 sowie auch den aktuellen Systemzustand wieder. Anschaulich stellen die Dokumente 15 und 24, 25, ... die einzelnen Seiten eines Logbuchs dar und bilden damit ein automatisiertes Change Control Protokoll.

Der Nutzer 22 kann - bei einer entsprechenden Autorisierung - einen Schreib-Lesezugriff auf das aktuelle Dokument 15 und /oder die Vorgänger-Dokumente 24, 25, ... vornehmen, um beispielsweise Kommentare, z.B. über den Grund der Wartungsarbeiten, einzutragen. Das händische Eintragen bzw. Ändern von System-Informationen ist dabei nicht möglich und auch nicht erforderlich, da diese Informationen ja durch das Abfrageprogramm 10 durch Abfrage der Beschreibungsdaten von den Systemkomponenten automatisch zusammengestellt und gegebenenfalls in dem aktuellen Dokument 15 gespeichert werden.

Das Automatisierungssystem 1 ist als verteiltes Automatisierungssystem ausgebildet, das heißt neben der Steuerung 2 gibt es ein oder mehrere weitere Steuerungen 6. Die ein oder mehrere weitere Steuerungen 6 können dabei gleich oder ähnlich wie die Steuerung 2 ausgebildet sein, gegebenenfalls mit geringerem Funktionsumfang und können beispielsweise intelligente Antriebe sein.

Insbesondere beinhaltet vorzugsweise jede der weiteren Steuerungen 6 ein Programm, welches dem Abfrageprogramm 10 der Steuerung 2 entspricht. Mittels eines solchen Programms generiert jede der Steuerungen 6 ein Teil-Dokument 9; die in den einzelnen Teil-Dokumenten 9 beinhaltete Informationen in Form der Beschreibungsdaten wird von dem Abfrageprogramm 10 der Steuerung 2 abgefragt und in ein Gesamtdokument zusammen mit den Beschreibungsdaten der weiteren Systemkomponenten integriert.

Beim Betrieb des Automatisierungssystems 1 kann es zum Beispiel aufgrund des Versagens einer der Hardware-Komponenten 5 zu einem Ausfall kommen. Der Nutzer 22 kann dann über die Schnittstelle 17 einen Lesezugriff auf den Speicher 16, das heißt, dass aktuelle Dokument durchführen.

Wenn es sich bei dem Nutzer 22 um einen entsprechend autorisierten Nutzer handelt und dies in dem Speicher 19 unter seinem Nutzerprofil abgespeichert ist, so wird die Zugriffsschutz-Programm-Komponente 18 den Zugriffsschutz aufheben, so dass der Nutzer 22 Veränderungen in dem aktuellen Dokument z. B. durch Kommentareinträge vornehmen kann.

Für den Austausch der defekten Hardware-Komponente 5 greift der Nutzer 22 jedoch zunächst über seinen Client-Computer 23 und das Netzwerk 20 auf die Validierungsdatenbank 21 zu, um ein kompatibles Ersatzteil zu ermitteln. Der Nutzer 22 tauscht dann die defekte Hardware-Komponente 5 gegen das kompatible Ersatzteil aus.

Die in dem Speicher 16 gespeicherten Dokumente 15, 24, 25,... reflektierten also die Änderungshistorie des Automatisierungssystems 1. Vorzugsweise wird für jede Änderung auch derjenige Nutzer mit abgespeichert, der die Änderung vorgenommen hat. Aufgrund dessen können Nachweispflichten, zum Beispiel gegenüber Behörden, dass das Automatisierungssystem 1 zu jedem Zeitpunkt in einem validierten Zustand gewesen ist, auf effiziente Art und Weise erfüllt werden (Logbuch bzw. Change Control Protokoll).

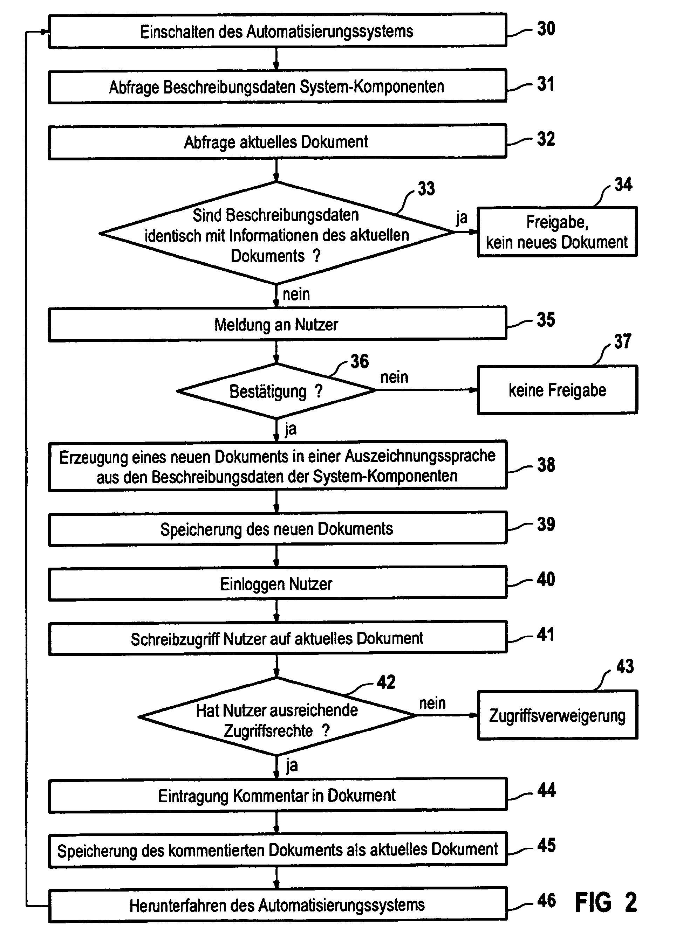

Die Figur 2 zeigt ein Flussdiagramm einer Ausführungsform des erfindungsgemäßen Automatisierungssystems. In dem Schritt 30 wird das Automatisierungssystem eingeschaltet. Daraufhin werden in dem Schritt 31 die Beschreibungsdaten der System-Komponenten abgefragt. Dies erfolgt durch Starten des Abfrage-Programms 10 (vgl. Figur 1), welches die Header-Datenfelder 7 und 14 der Software-Komponenten 4 und 13 sowie die Speicher 8 der Hardware-Komponenten 5 und die Teil-Dokumente 9 der Steuerungen 6 abfragt.

In dem Schritt 32 wird das aktuelle Dokument (vgl. Dokument 15 des Speichers 16) abgefragt. Die in dem aktuellen Dokument gespeicherten Beschreibungsdaten werden mit den in dem Schritt 31 abgefragten Beschreibungsdaten in dem Schritt 33 verglichen. Wenn die in dem Schritt 31 ermittelten Beschreibungsdaten keine Diskrepanz zu den Beschreibungsdaten des aktuellen Dokuments aufweisen, so bedeutet dies, dass sich das Automatisierungssystem in einem validierten Zustand befindet.

Aufgrund dessen erfolgt in dem Schritt 34 die Freigabe der Aktivierung des Automatisierungssystems. In diesem Fall ist es nicht erforderlich, einen neuen "Logbuch-Eintrag" zu kreieren, da sich ja an der Konfiguration des Automatisierungssystems nichts geändert hat. Die Erzeugung und Abspeicherung eines neuen Dokuments erübrigt sich also in diesem Fall.

Für den Fall, dass in dem Schritt 33 eine Diskrepanz festgestellt wird, erfolgt vorzugsweise zunächst in dem Schritt 35 die Erzeugung einer entsprechenden Meldung, die beispielsweise an den Nutzer ausgegeben wird. Der Nutzer hat dann die Möglichkeit die Diskrepanz zu prüfen, um festzustellen, ob sich das Automatisierungssystem trotz der Diskrepanz in einem validierten Zustand befindet. Diese Prüfung kann beispielsweise unter Zuhilfenahme der Validierungsdatenbank (vgl. Validierungsdatenbank 21) erfolgen.

Wenn die Prüfung in dem Schritt 36 ergibt, dass sich das Automatisierungssystem nicht in einem validierten Zustand befindet, erfolgt in dem Schritt 37 keine Freigabe. In einem solchen Fall ist zunächst eine Validierung durchzuführen.

Wenn in dem Schritt 36 jedoch eine Bestätigung eingeben wird, wonach sich das Automatisierungssystem in einem validierten Zustand befindet, so wird danach der Schritt 38 ausgeführt. Die Schritte 35 und 36 können alternativ auch automatisch oder teilautomatisch durchgeführt werden, indem die Meldung in dem Schritt 35 unmittelbar an ein automatisches Validierungssystem gerichtet wird, welches die Prüfung vornimmt, ob die Diskrepanz zulässig ist oder nicht.

In dem Schritt 38 erfolgt die Erzeugung eines neuen Dokuments zur Abspeicherung der in dem Schritt 31 ermittelten Beschreibungsdaten der System-Komponenten. Auf diese Art und Weise wird ein neuer Logbuch-Eintrag erzeugt, um die geänderte aktuelle Konfiguration des Automatisierungssystems zu dokumentieren. Dieses neue Dokument wird in dem Schritt 39 abgespeichert.

In dem Schritt 40 logt sich ein Nutzer ein, beispielsweise um einen Kommentar in das in dem Schritt 39 gespeicherte aktuelle Dokument einzutragen. Dieser Kommentar kann sich beispielsweise auf eine in dem Automatisierungssystem durch den Nutzer vorgenommene Änderung beziehen. In dem Schritt 41 initiiert der Nutzer hierzu einen Schreibzugriff auf das aktuelle Dokument. In dem Schritt 42 wird dann geprüft, ob der Nutzer für einen solchen Schreibzugriff ausreichende Zugriffsrechte hat. Wenn dies nicht der Fall ist, wird dem Nutzer der Schreibzugriff in dem Schritt 43 verweigert.

Wenn der Nutzer jedoch über ausreichende Zugriffsrechte verfügt, so kann er in dem Schritt 44 die gewünschte Änderung in dem aktuellen Dokument vornehmen, um beispielsweise seinen Kommentar einzugeben. In dem Schritt 45 wird das kommentierte Dokument dann als aktuelles Dokument gespeichert.

Später erfolgt dann ein Herunterfahren des Automatisierungssystems in dem Schritt 46, beispielsweise zur Durchführung von Wartungs- oder Reparaturarbeiten oder zum Schichtende. Bei einem danach folgenden Einschalten des Automatisierungssystems werden die zuvor beschriebenen Schritte 30 bis 45 wiederum ganz oder teilweise abgearbeitet.

Im Laufe der Zeit kommt es dabei sukzessive zur Speicherung von Dokumenten, die die jeweilige Konfiguration des Automatisierungssystems dokumentieren. Auf diese Art und Weise wird die Änderungshistorie des Automatisierungssystems dokumentiert. Diese Dokumentation kann als Nachweis dienen, dass das Automatisierungssystem zu jedem Zeitpunkt in einem validierten Status war.

Die Figur 3 zeigt ein Flussdiagramm für den Fall, dass eine der Hardware-Komponenten 5(vgl. Figur 1) ausgefallen ist. In dem Schritt 50 wird ein solcher Hardware-Ausfall festgestellt.

Wenn eine gleiche Hardware-Komponente mit gleichen Beschreibungsdaten zur Verfügung steht, so kann die defekte Hardware-Komponente 5 einfach ausgetauscht werden. Wenn nicht dieselbe Hardware-Komponente zur Verfügung steht, wird in dem Schritt 51 geprüft, ob die defekte Hardware-Komponente 5 durch ein kompatibles Ersatzteil ausgetauscht werden kann. Diese Prüfung erfolgt durch eine entsprechende Abfrage der Validierungsdatenbank 21 (vgl. Figur 1).

Wenn die defekte Hardware-Komponente durch ein solches kompatibles Ersatzteil ausgestauscht wird, so wird in dem Schritt 52 eine entsprechende Eintragung in dem aktuellen Dokument des Speichers vorgenommen. Dies entspricht einem "Logbuch-Eintrag".

Wenn der Austausch gegen ein kompatibles Ersatzteil nicht möglich ist oder ein solches kompatibles Ersatzteil nicht zur Verfügung steht wird in dem Schritt 53 geprüft, ob der Austausch mit einem Ersatztyp möglich ist, wenn bestimmte Steuerungsdaten angepasst werden. Wenn dies der Fall ist, wird in dem Schritt 54 die defekte Hardware-Komponente gegen den Ersatztyp ausgetauscht und die Datenanpassung vorgenommen.

Danach wird in dem Schritt 55 geprüft, ob durch den Austausch der defekten Hardware-Komponente durch den Ersatztyp und die Datenanpassung die Anwendung betroffen ist. Wenn dies nicht der Fall ist, wird in dem Schritt 56 der Austausch der Hardware-Komponente mit Datenanpassung und Test in dem aktuellen Dokument zur Erzeugung einer entsprechenden Logbuch-Eintragung gespeichert.

Wenn die Prüfung in dem Schritt 53 ergibt, dass der Austausch mit einem Ersatztyp mit Datenanpassung nicht möglich ist oder wenn die Prüfung in dem Schritt 55 ergibt, dass die Anwendung betroffen ist, so wird der Schritt 56 bzw. der Schritt 57 durchgeführt, um die Anwendung anzupassen und zu testen. Nur für diese beiden Fälle ist dann in dem Schritt 58 eine Revalidierung des Automatisierungssystems erforderlich.

## Patentansprüche

1. Automatisierungssystem mit
- einer Anzahl von System-Komponenten (4, 5, 6, 13), wobei jede der System-Komponenten zur Speicherung von Beschreibungsdaten (7, 8, 14), die den Zustand der System-Komponente betreffen, ausgebildet ist,
- Programmmitteln (10) zum Lesen der Beschreibungsdaten, zum Vergleichen der Beschreibungsdaten mit Beschreibungsdaten eines aktuellen Dokuments (15), um festzustellen, ob eine Zustandsänderung vorliegt, und zum Erzeugen eines aktuellen Dokuments in einer Auszeichnungssprache mit den Beschreibungsdaten bei Vorliegen einer Zustandsänderung, und
- Speichermitteln (16) zum Speichern des aktuellen Dokuments und von Vorgänger-Dokumenten.

2. Automatisierungssystem nach Anspruch 1, wobei die Programmmittel (10) ausgebildet sind, die Beschreibungsdaten bei der Initialisierung des Automatisierungssystems zu lesen.

3. Automatisierungssystem nach Anspruch 1, wobei es sich bei den System-Komponenten um Hardware-, Software- und/oder Steuerungs-Komponenten handelt.

4. Automatisierungssystem nach Anspruch 3, wobei mindestens eine der Hardware-Komponenten einen Speicher (8) zur Speicherung seiner Beschreibungsdaten aufweist.

5. Automatisierungssystem nach Anspruch 3 oder 4, wobei mindestens eine der Software-Komponenten ein Datenfeld (7) zur Speicherung von seinen Beschreibungsdaten aufweist.

6. Automatisierungssystem nach einem der Ansprüche 3, 4 oder 5, wobei mindestens eine der Steuerungs-Komponenten zweite Programmmittel zur Erzeugung eines aktuellen Teil-Dokuments (9) in der Auszeichnungssprache mit Beschreibungsdaten, der zu der Steuerungs-Komponente gehörenden Teil-System-Komponenten, aufweist.

7. Automatisierungssystem nach einem der Ansprüche 1 bis 6 mit
- Schnittstellenmitteln (17) für den Schreib- / Lese-Zugriff auf das aktuelle Dokument in den Datenbankmitteln,
- Mitteln (18, 19) für den Schreib-Zugriffsschutz auf das aktuelle Dokument und auf Vorgänger-Dokumente.

8. Automatisierungssystem nach einem der vorhergehenden Ansprüche 1 bis 7 mit Mitteln (23, 20) zum Zugriff auf eine Validierungsdatenbank (21) zur Prüfung, ob für eine Änderung der Beschreibungsdaten eine Validierung erforderlich ist.

9. Verfahren zur Erzeugung einer Dokumentation für ein Automatisierungssystem nach einem der vorhergehenden Ansprüche 1 bis 8 mit folgenden Schritten:
- Lesen von Beschreibungsdaten (7, 8, 9, 14), die in System-Komponenten (4, 5, 6, 13) des Automatisierungssystems gespeichert sind, wobei die in der jeweiligen System-Komponente gespeicherten Beschreibungsdaten den Zustand der System-Komponente betreffen;
- Vergleichen der Beschreibungsdaten mit Beschreibungsdaten eines aktuellen Dokuments (15), um festzustellen, ob eine Zustandsänderung vorliegt,
- Erzeugen eines aktuellen Dokuments in einer Beschreibungssprache mit den Beschreibungsdaten mittels Programmmitteln bei Vorliegen einer Zustandsänderung und
- Speichern des aktuellen Dokuments und von Vorgänger-Dokumenten mittels Speichermitteln.

10. Verfahren nach Anspruch 9, bei dem die Beschreibungsdaten bei der Initialisierung des Automatisierungssystems ausgelesen werden.

11. Verfahren nach Anspruch 9 mit folgenden weiteren Schritten:
- Aufheben eines Zugriffsschutzes (18, 19) für einen autorisierten Schreib-Zugriff auf die Statusdatenbank (16),
- Eingeben eines Kommentars in das aktuelle Dokument,
- automatisches Speichern einer Angabe zur Identifizierung desjenigen Nutzers (22), welcher den Kommentar eingegeben hat, wobei vorzugsweise auf ein Nutzer-Profil (19) zugegriffen wird.

12. Verfahren nach einem der Ansprüche 9 bis 11, wobei vor der Eintragung der Änderung in das aktuelle Dokument auf eine Validierungsdatenbank (21) zugegriffen wird, zur Prüfung, ob für die Änderung eine Validierung erforderlich ist.

13. Computerprogrammprodukt, das, wenn es in den Speicher einer Datenverarbeitungsanlage geladen und darin zur Ausführung gebracht wird, die Schritte des Verfahrens nach einem der Ansprüche 9, 10, 11 oder 12 ausführt.

## Claims

1. Automation system having
- a number of system components (4, 5, 6, 13), wherein each of the system components is designed to store description data (7, 8, 14) relating to the state of the system component,
- program means (10) for reading the description data, for comparing the description data with description data from a current document (15) in order to establish whether there is a state change, and for producing a current document in a markup language using the description data when there is a state change, and
- memory means (16) for storing the current document and predecessor documents.

2. Automation system according to Claim 1, wherein the program means (10) are designed to read the description data when the automation system is initialized.

3. Automation system according to Claim 1, wherein the system components are hardware, software and/or control components.

4. Automation system according to Claim 3, wherein at least one of the hardware components has a memory (8) for storing its description data.

5. Automation system according to Claim 3 or 4, wherein at least one of the software components has a data field (7) for storing its description data.

6. Automation system according to one of Claims 3, 4 and 5, wherein at least one of the control components has second program means for producing a current subdocument (9) in the markup language using description data, from the subsystem components associated with the control component.

7. Automation system according to one of Claims 1 to 6, having
- interface means (17) for read/write access to the current document in the database means,
- means (18, 19) for protecting write access to the current document and to predecessor documents.

8. Automation system according to one of the preceding Claims 1 to 7, having means (23, 20) for accessing a validation database (21) in order to check whether validation is required for changing the description data.

9. Method for producing documentation for an automation system according to one of the preceding Claims 1 to 8, having the following steps:
- description data (7, 8, 9, 14) which are stored in system components (4, 5, 6, 13) in the automation system are read, wherein the description data stored in the respective system component relate to the state of the system component;
- the description data are compared with description data from a current document (15) in order to establish whether there is a state change,
- a current document is produced in a description language using the description data by means of program means when there is a state change, and
- the current document and predecessor documents are stored by means of memory means.

10. Method according to Claim 9, in which the description data are read when the automation system is initialized.

11. Method according to Claim 9, having the following further steps:
- access protection (18, 19) is lifted for authorized write access to the status database (16),
- a comment is input into the current document,
- a statement for identifying that user (22) who has input the comment is automatically stored, with a user profile (19) preferably being accessed.

12. Method according to one of Claims 9 to 11, wherein entry of the change into the current document is preceded by a validation database (21) being accessed in order to check whether validation is required for the change.

13. Computer program product which, when loaded into the memory of a data processing installation and executed therein, performs the steps of the method according to one of Claims 9, 10, 11 and 12.

## Revendications

1. Système d'automatisation ayant
- un certain nombre de composants de système ( 4, 5, 6, 13 ), chacun des composants de système étant conçu pour mémoriser des données de description ( 7, 8, 14 ) qui concernent l'état du composant de système,
- des moyens formant programme ( 10 ) pour lire les données de description, pour comparer les données de description à des données de description d'un document actuel ( 15 ), pour déterminer si un changement d'état a eu lieu et pour produire un document actuel dans un langage de balisage avec les données de description si un changement d'état a eu lieu, et
- des moyens formant mémoire ( 16 ) pour mémoriser le document actuel et des documents antérieurs.

2. Système d'automatisation selon la revendication 1, les moyens formant programme ( 10 ) étant conçus pour lire les données de description lors de l'initialisation du système d'automatisation.

3. Système d'automatisation selon la revendication 1, les composants de système étant des composants matériels, logiciels et/ou de commande.

4. Système d'automatisation selon la revendication 3, au moins l'un des composants matériels comportant une mémoire ( 8 ) pour mémoriser ses données de description.

5. Système d'automatisation selon la revendication 3 ou 4, au moins l'un des composants logiciels comportant un champ de données ( 7 ) pour mémoriser ses données de description.

6. Système d'automatisation selon l'une des revendications 3, 4 ou 5, au moins l'un des composants de commande comportant des deuxièmes moyens formant programme pour produire un document partiel actuel ( 9 ) dans le langage de balisage avec des données de description des composants de système partiels appartenant au composant de commande.

7. Système d'automatisation selon l'une des revendications 1 à 6, avec
- des moyens formant interface ( 17 ) pour l'accès en écriture / lecture au document actuel dans les moyens formant base de données,
- des moyens ( 18, 19 ) pour la protection d'accès en écriture au document actuel et à des documents antérieurs.

8. Système d'automatisation selon l'une des revendications précédentes 1 à 7, avec des moyens ( 23, 20 ) pour l'accès à une base de données de validation ( 21 ) afin de vérifier si une validation est nécessaire pour un changement des données de description.

9. Procédé de production d'une documentation pour un système d'automatisation selon l'une des revendications précédentes 1 à 8 avec les étapes suivantes :
- lecture de données de description ( 7, 8, 9, 14 ) qui sont mémorisées dans des composants de système ( 4, 5, 6, 13 ) du système d'automatisation, les données de description mémorisées dans le composant de système respectif concernant l'état du composant de système,
- comparaison des données de description à des données de description d'un document actuel ( 15 ) pour déterminer si un changement d'état a eu lieu,
- production d'un document actuel dans un langage de description avec les données de description à l'aide des moyens formant programme si un changement d'état a eu lieu, et
- mémorisation du document actuel et de documents antérieurs à l'aide de moyens de mémorisation.

10. Procédé selon la revendication 9, les données de description étant lues lors de l'initialisation du système d'automatisation.

11. Procédé selon la revendication 9, avec les autres étapes suivantes :
- levée d'une protection d'accès ( 18, 19 ) pour un accès en écriture autorisé à la base de données d'état ( 16 ),
- entrée d'un commentaire dans le document actuel,
- mémorisation automatique d'une indication en vue de l'identification de l'utilisateur ( 22 ) qui a entré le commentaire, un accès à un profil d'utilisateur ( 19 ) étant effectué de préférence.

12. Procédé selon l'une des revendications 9 à 11, un accès à une base de données de validation ( 21 ) étant effectué avant l'enregistrement du changement dans le document actuel afin de vérifier si une validation est nécessaire pour le changement.

13. Programme informatique qui, lorsqu'il est chargé dans la mémoire d'une installation de traitement de données et lorsqu'il est exécuté dans celle-ci, exécute les étapes du procédé selon l'une des revendications 9, 10, 11 ou 12.
